# EUROPEAN PATENT APPLICATION

(11) **EP 1 182 600 A2**
(43) Date of publication of application: **27.02.2002**
(21) Application number: 01306796.2
(22) Date of filing: 09.08.2001
(51) Int. Cl.: G06F 17/60

(54) **Methods and apparatus for previewing multimedia attachments of electronic messages**

(30) Priority: 21.08.2000 US 643150
(71) Applicant: Mitel Knowledge Corporation, Kanata, Ontario K2K 2W7 (CA)
(72) Inventor: Saltanov, Alexey, Santa Clara, CA 95056-4886 (US)
(74) Representative: Naismith, Robert Stewart

(57) **Abstract**

Techniques for previewing various multimedia attachments of electronic messages exchanged in an electronic messaging system operating are disclosed. The techniques can be utilized to allow a user to preview multimedia attachments using a graphical user interface in a convenient way. Accordingly, A user can quickly ascertain the gist of multimedia attachments to electronic messages. In addition, the techniques can be implemented as an integral solution to allow users to preview various multimedia attachments in a unified or multimedia messaging system. As a result, the user of the unified or multimedia messaging system can conveniently preview all forms of communications without having to initiate different programs and/or windows for different types of multimedia attachments.

## Description

### Field Of The Invention

The present invention relates to electronic messaging systems, and more particularly, to electronic messaging systems suitable for exchanging electronic messages with multimedia attachments.

### Background Of The Invention

Most computer users are familiar with electronic messaging systems and applications. For example, one common type of an electronic messaging application is Electronic Mail ("E-mail") which allows users to exchange text messages over a computer network such as a Local Area Network (LAN) or a Wide Area Network (WAN).

Electronic Mail users can typically access an electronic messaging system through a graphical user interface. When a user accesses an electronic messaging system through a personal computer, the messages in the user's mailbox are presented to the user via the graphical user interface which can be provided by a messaging program executed by the personal computer operating in Windows operating environment. As an example, a well known messaging program of this nature is sold by Microsoft Corporation under the name Microsoft Outlook®. The graphical user interface of the Microsoft Outlook® presents forms (windows) to users to allow users to compose and read messages.

In the Windows operating environment, a user typically initiates the messaging program by opening a graphical message exchange window to review stored messages. The message exchange window can include a list of message identifiers which represent the stored messages. A message identifier can provide information such the subject of the message, name of the sender, and the time message was received. By interacting with the graphical user interface, the user can read or delete stored messages, compose new messages, and perform a variety of message exchange related tasks (e.g., reply, forward, etc.).

Recently, messaging programs have provided users with the ability to preview messages by viewing a graphical window. For example, U.S. Patent Number 5,835,084, entitled "Method and computerized apparatus for distinguishing between read and unread messages listed in a graphical message window", discloses the addition of a "preview pane" to the message window. The preview pane can be used to quickly preview stored messages. For example, the preview pane can be provided as a dedicated portion of the message window which adjoins a panel containing the list of stored messages (message list). The preview pane shows a portion of the content of the message that is highlighted by a highlight bar in the message list. In this manner, the preview pane allows users of the messaging system to quickly view a portion of the content of textual messages without requiring the users to explicitly open messages into their own separate window. Although the preview pane is a convenient way for the users to quickly ascertain the gist of textual messages, the preview pane does not allow preview of non-textual messages. This limitation poses a serious drawback since, in addition to exchanging text messages, more recent electronic messaging systems also provide the ability to exchange other forms of non-textual communication (multimedia), for example, audio, video or graphics.

In the past, separate messaging systems were used to handle different types of multimedia communication. However, the more desired approach is to integrate these various messaging systems to allow users to access all types of communications by using a single integrated messaging system. To that end, unified or multimedia messaging systems have been recently developed to provide users access to virtually all of forms non-textual communication.

In view of foregoing, there is a need for techniques for previewing electronic messages with various multimedia attachments.

### Summary Of The Invention

Broadly speaking, the invention relates to techniques for previewing electronic messages with multimedia attachments. The invention is especially suitable for messaging systems accessed by computers operating in environments which provide their users with graphical user interfaces to access the messaging systems.

In accordance with one aspect of the invention, techniques for previewing various multimedia attachments of electronic messages exchanged in an electronic messaging system are disclosed. The techniques can be implemented in a messaging system providing a graphical user interface which allows users to preview multimedia attachments to messages by interacting with a single graphical window. Accordingly, users can quickly ascertain the gist of multimedia attachments to electronic messages without having to open separate windows. In addition, the techniques can be implemented as an integral solution to allow users to preview various multimedia attachments in a unified or multimedia messaging system. As a result, users of the unified or multimedia messaging system can conveniently preview all forms of communications without having to initiate different programs and/or windows for different types of multimedia attachments.

The invention can be implemented in numerous ways, including as a system, an apparatus, a method, or a computer readable medium. Several embodiments of the invention are discussed below.

As a method for previewing electronic messages having multimedia attachments in a non-textual format, one embodiment of the invention includes the acts of: determining whether an electronic message has at least one multimedia attachment in a non-textual format; and providing a preview of at least one multimedia attachment in a non-textual format when the determining determines that the electronic message has at least one multimedia attachment in a non-textual format.

As an electronic message previewing system suitable for previewing multimedia attachments of electronic messages exchanged within an electronic messaging system, one embodiment of the invention includes a multimedia message attachment detector operating to detect the presence of non-textual multimedia attachments of electronic messages; and a multimedia player operating to play at least one portion of a non-textual multimedia attachment when the multimedia message attachment detector detects the presence of a multimedia attachment in a non-textual format.

As a method for providing users of an electronic messaging system with preview of non-textual attachments to electronic messages when users accesses the electronic messaging system through a graphical user interface to exchange electronic messages with non-textual attachments, one embodiment of the invention includes the acts of: displaying a graphical representation of an electronic message with a non-textual attachment in a list of messages, the list of messages representing messages available for preview by the user and being displayed in a portion of a window of the graphical user interface to be viewed by the user; determining whether the user has selected the graphical representation of the electronic message with a non-textual attachment in the list of messages; and displaying a graphical representation of an appropriate multimedia preview enabler when the determining determines that the user has selected the graphical representation of the electronic message with a non-textual attachment in the list of messages.

As a computer readable media including computer program code for previewing electronic messages having multimedia attachments in a non-textual format, one embodiment of the present invention includes computer program code for determining whether an electronic message has at least one multimedia attachment in a non-textual format; and computer program code for providing a preview of at least one multimedia attachment in a non-textual format when the determining determines that the electronic message has at least one multimedia attachment in a non-textual format.

The advantages of the invention are numerous. Different embodiments or implementations may have one or more of the following advantages. One advantage is that the invention allows users of electronic messaging systems to preview electronic messages with non-textual attachments. Another advantage is that the invention allows users to preview non-textual attachments using a single window in a windows-based environment. Yet another advantage is that the invention can be implemented in a unified or multimedia messaging system to allow the users to preview various kinds of multimedia attachments.

Other aspects and advantages of the invention will become apparent from the following detailed description, taken in conjunction with the accompanying drawings, illustrating by way of example the principles of the invention.

### Brief Description Of The Drawings

The present invention will be readily understood by the following detailed description in conjunction with the accompanying drawings, wherein like reference numerals designate like structural elements, and in which:
Fig. 1 illustrates a simplified electronic messaging system in accordance with one embodiment of the present invention.
Fig. 2 illustrates an exemplary multimedia previewing method for previewing electronic messages having one or more multimedia attachments in accordance with one embodiment of the present invention.
Fig. 3 illustrates a display window in accordance with one embodiment of the present invention.
Fig. 4 illustrates an electronic message exchange window in accordance with another embodiment of the present invention.
Figs. 5A-5B illustrate an electronic message exchange window in accordance with yet another embodiment of the present invention.

### Detailed Description Of The Invention

The invention pertains to techniques for previewing electronic messages with multimedia attachments. The invention is especially suitable for messaging systems accessed by computers operating in environments which provide their users with graphical user interfaces to access the messaging systems.

In accordance with one aspect of the invention, techniques for previewing various multimedia attachments of electronic messages exchanged in an electronic messaging system are disclosed. The techniques can be implemented in a messaging system providing a graphical user interface which allows users to preview multimedia attachments to messages by interacting with a single graphical window. Accordingly, users can quickly ascertain the gist of multimedia attachments to electronic messages without having to open separate windows. In addition, the techniques can be implemented as an integral solution to allow users to preview various multimedia attachments in a unified or multimedia messaging system. As a result, users of the unified or multimedia messaging system can conveniently preview all forms of communications without having to initiate different programs and/or windows for different types of multimedia attachments.

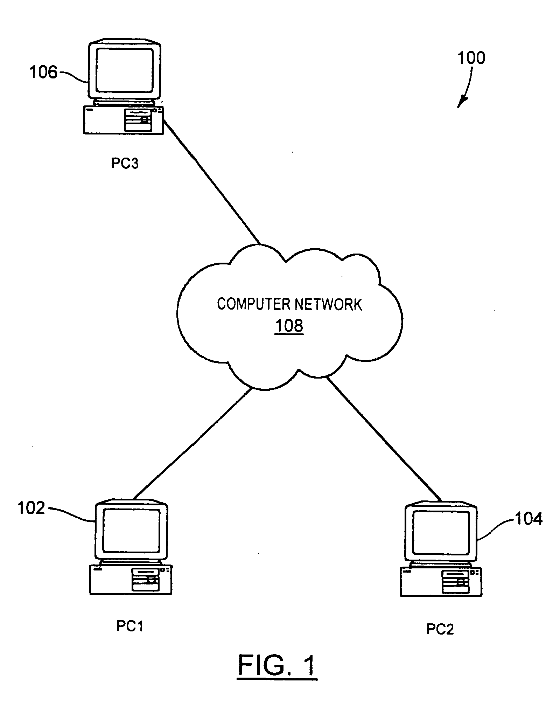

Embodiments of the invention are discussed below with reference to Figs. 1-5B. However, those skilled in the art will readily appreciate that the detailed description given herein with respect to these figures is for explanatory purposes as the invention extends beyond these limited embodiments.

Fig. 1 illustrates a simplified electronic messaging system 100 in accordance with one embodiment of the present invention. The electronic messaging system 100 includes personal computers 102, 104 and 106 which are connected to a computer network 108. As will be known to those skilled in the art, for example, the computer network 108 can be a Local Area Network (e.g., Ethernet, Token ring, etc.), a Wide Area Network, or the Internet. Personal computers 102, 104 and 106 can exchange (send and receive) electronic messages with each other. The electronic messages are transmitted through the computer network 108. As will appreciated by those skilled in the art, in addition to text, the electronic messages exchanged by the personal computers 102, 104 and 106 can include multimedia attachments. These multimedia attachments can include audio (e.g., voice), graphics (images) or video. Such multimedia attachments can, for example, be presented as .wav file for audio, .gif or facsimile file for graphics or images, or MPEG for video.

In accordance with one embodiment of the invention, one or more of the personal computers 102, 104 and 106 can be provided with the capability of previewing multimedia segments that may be attached to electronic messages exchanged through the computer network 108. For example, the personal computer 102 can be provided with the ability to determine whether any electronic messages exchanged by it has a non-textual attachment (i.e., multimedia attachment). When the presence of a multimedia attachment is detected, the personal computer 102 can provide its user with the ability to preview the multimedia attachment. For example, if the presence of a voice attachment to an electronic message is detected by the personal computer 102, a portion of the voice attachment can be played for the user so that the voice attachment can be previewed by the user.

Furthermore, the invention can be implemented in a messaging system that provides the user with a graphical user interface (e.g., Windows operating environment). As will be described below, in such environments the invention can be implemented to allow a user to preview multimedia attachment in a single window in a convenient way without requiring the user to open additional windows.

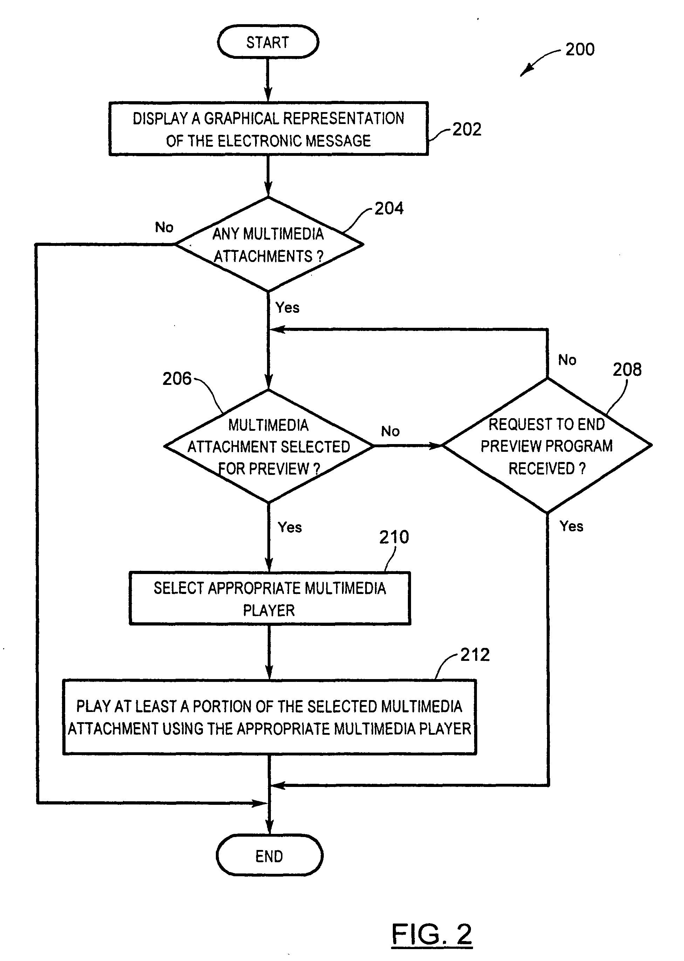

Fig. 2 illustrates an exemplary multimedia previewing method 200 for previewing electronic messages having one or more multimedia attachments, in accordance with one embodiment of the present invention. For example, the multimedia previewing method 200 can be implemented as a software program running on the personal computer 102 of Fig. 1. The personal computer 102 may be operating with respect to a messaging system that provides the user with a graphical user interface (e.g., Windows operating environment). The user can access the messaging system by using the graphical user interface that is displayed on the display device of the personal computer 102.

Initially, at operation 202, a graphical representation of an electronic message is displayed. Next, at operation 204, a determination is made as to whether the electronic message has any attachments in a non-textual format (i.e., multimedia attachments). Herein, attachments in a non-textual format are also referred to as multimedia attachments. If it is determined at operation 204 that the electronic message does not have any multimedia attachments, the multimedia previewing method 200 ends because there is no multimedia attachment to be viewed. However, if it is determined at operation 204 that the electronic message has at least one multimedia attachment, the multimedia previewing method 200 proceeds to operation 206 where a determination is made as to whether any of the multimedia attachments have been selected to be previewed. Typically, the user would interact with a graphical user interface to select a particular multimedia attachment to be previewed.

If it is determined at operation 206 that no multimedia attachment is selected to be previewed, the multimedia previewing method 200 proceeds to operation 208 where a determination is made as to whether a request to end the multimedia previewing method 200 has been received. If it is determined at operation 208 that a request to end the multimedia previewing method 200 has been received, the multimedia previewing method 200 ends. On the other hand, if it is determined at operation 208 that a request to end the multimedia previewing method 200 has not been received, the multimedia previewing method 200 proceeds back to operation 206 where a determination is made as to whether a multimedia attachment has been selected for preview.

When a determination is made at operation 206 that a multimedia attachment of the electronic message has been selected, the multimedia previewing method 200 proceeds to operation 210 where the appropriate multimedia player is selected to play the multimedia attachment. For example, if the multimedia attachment is a voice attachment (e.g., .wav file), the appropriate audio-player is selected. As another example, if the multimedia attachment is a video attachment (e.g., MPEG file), the appropriate video player is selected. Finally, at operation 212, at least a portion of the selected multimedia attachment is played using the appropriate multimedia player to allow a preview of the selected multimedia attachment.

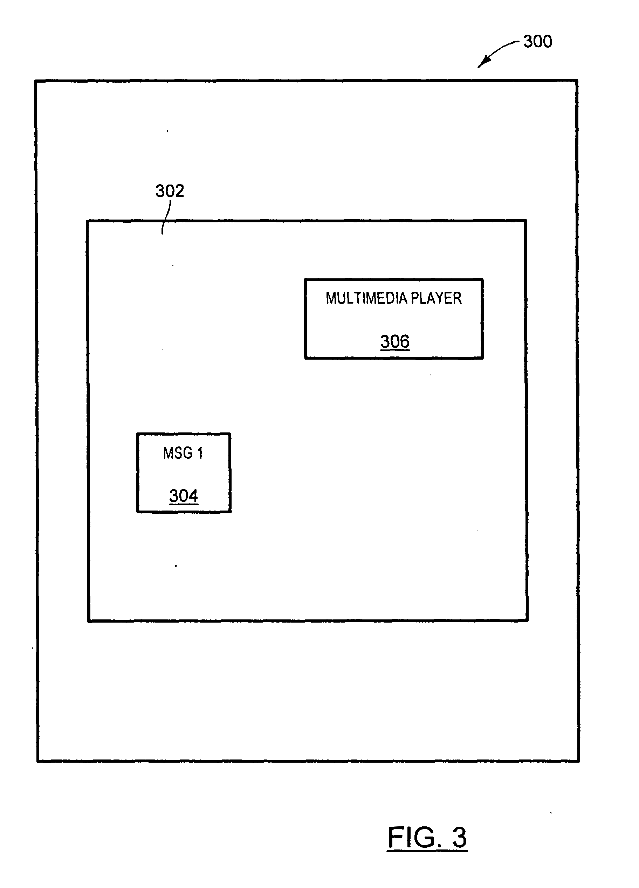

Fig. 3 illustrates a display window 300 in accordance with one embodiment of the present invention. For example, the window 300 can be displayed on a display device (e.g., computer screen) of the personal computer 102 of Fig. 1 operating in a Windows operating environment. The display window 300 includes an electronic message exchange window 302. A graphical representation 304 of an electronic message is displayed in the electronic message exchange window 302. The graphical representation 304 represents an electronic message which can be exchanged by a user. A graphical representation 306 of a multimedia player is also displayed in the electronic message exchange window 302.

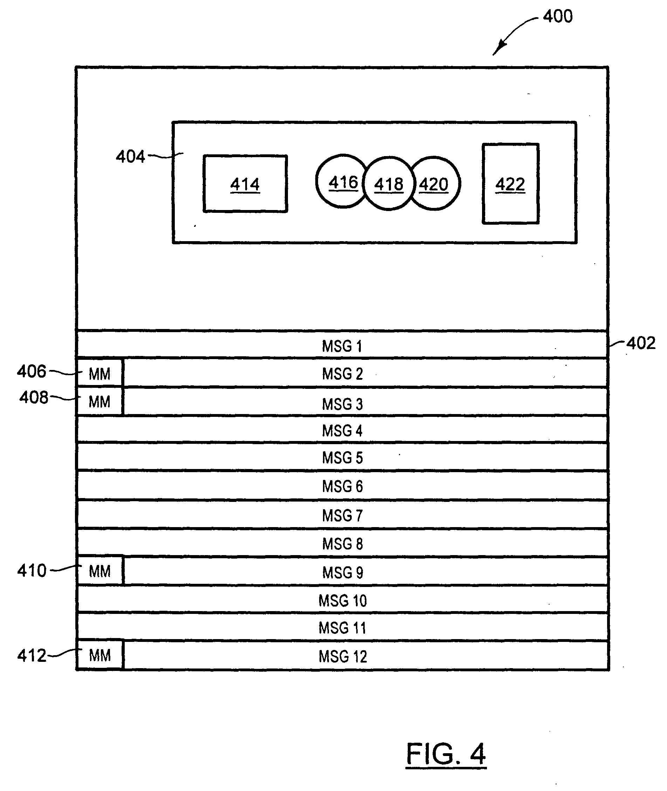

In accordance with another embodiment of the present invention, Fig. 4 illustrates an electronic message exchange window 400. The electronic message exchange window 400 can, for example, represent a more particular embodiment of the message exchange window 302 of Fig. 3. The electronic message exchange window 400 can, for example, be displayed on a display device (e.g., computer screen) of the personal computer 102 of Fig. 1. The electronic message exchange window 400 includes a message list portion 402 and a multimedia player portion 404. The message list portion 402 can be utilized to display a list of message identifiers for a user. As illustrated in Fig. 4, the list of message identifiers correspond to messages 1-12, e.g., msg1-msg12, which can be exchanged by the user. For example, each of the message identifiers Msg1-Msg12 can provide the title or subject of an electronic message, as well as other information such as the address (E-mail address) of the sender and the date and time of the transmission of the electronic message. Multimedia indicators icons 406, 408, 410, and 412 are provided to respectively indicate that messages Msg2, Msg3, Msg9 and Msg12 have multimedia attachments.

The multimedia player portion 404 of the electronic message exchange window 400 enables a user to preview multimedia attachments to the electronic messages represented by the list of message identifiers Msg1-Msg12. For example, a user may select an electronic message (e.g., Msg2) using the graphical user interface (e.g., through keyboard or pointing device interaction). When a message with a multimedia attachment is selected by the user, the multimedia player portion 404 can be updated to reflect a graphical representation of the appropriate multimedia player. In one embodiment, the multimedia player portion 404 can include a multimedia player display portion 414, multimedia player control icons 416, 418, and 420, and a multimedia player setting icon 422. The multimedia player display portion 414 can display information about the multimedia attachment that is being played by the multimedia player represented by the multimedia player portion 404. The multimedia player control icons 416, 418, and 420 can be used to control the multimedia player (e.g., forward, backward, or stop play). The multimedia player setting icon 422 can be used to adjust various setting of the multimedia player (e.g., volume, brightness, etc.)

In this way, a user may select an electronic message with a multimedia attachment and can be provided with a preview of the multimedia attachment. As will be appreciated by those skilled in the art, there is no need for the user to select the appropriate media player and/or open any additional windows in order to preview multimedia attachments to electronic messages. As a result, a user can quickly preview various multimedia attachments without having to interact with several windows and/or messaging programs.

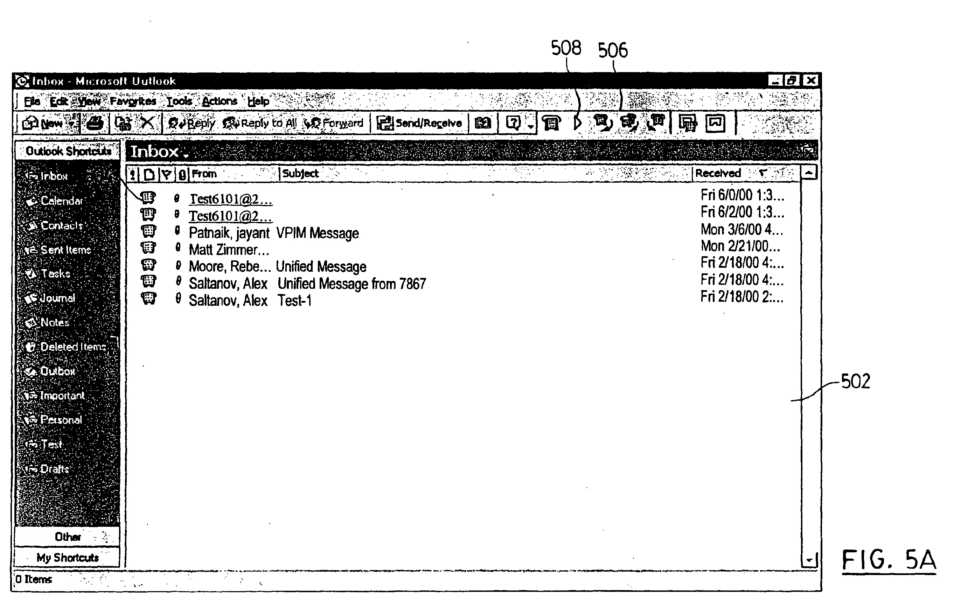

In accordance with yet another embodiment of the present invention, Fig. 5A illustrates an electronic message exchange window 500. The electronic message exchange window 500 can, for example, represent a more particular embodiment of the message exchange window 302 of Fig. 3 or 400 of Fig. 4. The message exchange window 500 can, for example, be displayed on a display device (e.g., computer screen) of the personal computer 102 of Fig. 1 operating in Windows operating environment.

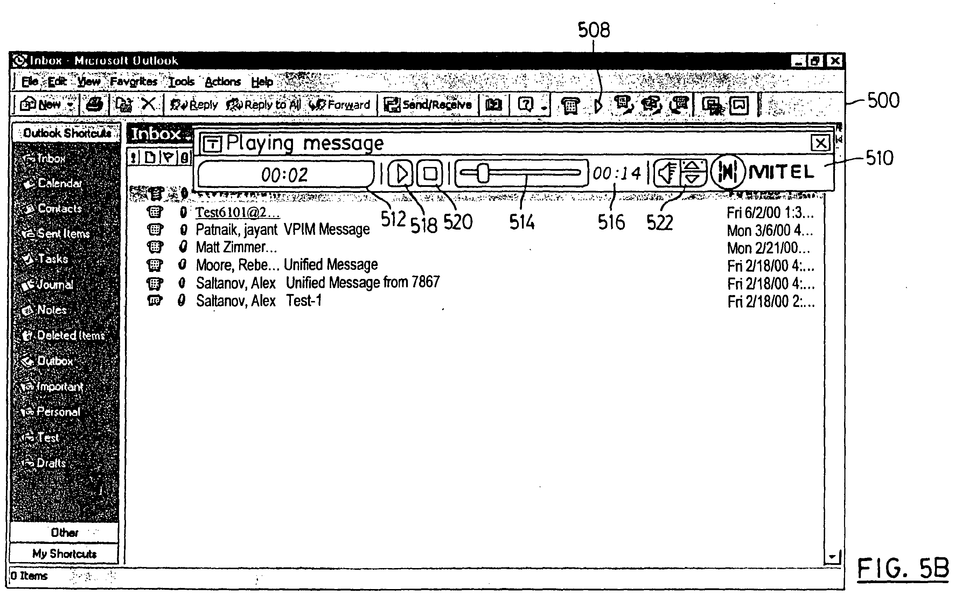

The electronic message exchange window 500 includes a message list portion 502 which is used to display a list of message identifiers representing electronic messages available for selection. As depicted in Fig. 5A, the first message identifier in the message list portion 502 is highlighted to indicate that this message has been selected. It should be noted that an icon 504 indicates that the selected message has a multimedia attachment in a voice format (e.g., .wav file). A multimedia message exchange control portion 506 having various icons represents message exchange options readily available to the user with respect the voice attachment of the selected message (e.g., reply, reply to all, and forward). In addition, a play icon 508 of the multimedia message exchange control portion 506 allows the user to start previewing the voice attachment of the selected message. Accordingly, the user may start previewing the voice attachment by selecting the play icon 508. As will discussed below with reference to Fig. 5B, selecting the play icon 508 automatically initiates the appropriate multimedia media player and without requiring the user to open any additional windows.

Although in the example of Fig. 5A electronic messages with voice attachments has have been illustrated, it should be noted that the present invention can be utilized to preview any other types of multimedia attachment (e.g., graphics, facsimile, video, etc.).

Turning now to Fig. 5B, a multimedia player portion 510 is shown in the same electronic message exchange window 500 of Fig. 5A. The multimedia player portion 510 can be displayed in response to the selection of the play icon 508 by the user. The multimedia player portion 510 represents the appropriate multimedia player which in this example is an audio-player suitable to play the voice attachment of the selected message. As depicted in Fig. 5B, to allow the user to view information relevant to the multimedia player and its operation, the multimedia player portion 510 includes display portions 512, 514 and 516. Control portions 518 and 520, and a setting portion 522 are also provided to allow the user to control the multimedia player.

It should also be noted that the multimedia message exchange control portion 506 can be provided in a portion (e.g., toolbar) of the same electronic message exchange window 500, in accordance with one embodiment of the present invention. As a result, the user does not need to open any additional windows in order to perform various tasks relating to exchange and/or preview multimedia attachments to electronic messages.

Furthermore, the appropriate multimedia message exchange control portion 506 for a particular type of multimedia attachment can be automatically provided for a selected electronic message, in accordance with one embodiment of the present invention. As a result, there is no need for the user to identify and activate different programs to exchange and/or preview multimedia attachments to electronic messages. In this way, the user may continue to preview other multimedia attachments by using the graphical user interface (e.g., selecting another message through keyboard or device interaction).

The invention can use a combination of hardware and software components. The software can be embodied as computer readable code (or computer program code) on a computer readable medium. The computer readable medium is any data storage device that can store data which can thereafter be read by a computer system. Examples of the computer readable medium include read-only memory, random-access memory, CD-ROMs, magnetic tape, and optical data storage devices. The computer readable medium can also be distributed over a network coupled computer systems so that the computer readable code is stored and executed in a distributed fashion.

The advantages of the invention are numerous. Different embodiments or implementations may have one or more of the following advantages. One advantage is that the invention allows users of electronic messaging systems to preview electronic messages with non-textual attachments. Another advantage is that the invention allows users to preview non-textual attachments using a single window in a windows-based environment. Yet another advantage is that the invention can be implemented in a unified or multimedia messaging system to allow the users to preview various kinds of multimedia attachments.

The many features and advantages of the present invention are apparent from the written description, and thus, it is intended by the appended claims to cover all such features and advantages of the invention. Further, since numerous modifications and changes will readily occur to those skilled in the art, it is not desired to limit the invention to the exact construction and operation as illustrated and described. Hence, all suitable modifications and equivalents may be resorted to as falling within the scope of the invention.

## Claims

1. A method of previewing electronic messages having multimedia attachments, said method comprising:
determining whether an electronic message has at least one multimedia attachment in a non-textual format; and
providing a preview of the at least one multimedia attachment in a non-textual format when said determining determines that the electronic message has at least one multimedia attachment in a non-textual format.

2. A method as recited in claim 1, wherein the method further comprises:
determining whether the least one multimedia attachment in a non-textual format has been selected to be previewed when said determining determines that the electronic message has at least one multimedia attachment in a non-textual format.

3. A method as recited in claim 1, wherein the method further comprises:
determining an appropriate multimedia player for the at least one multimedia attachment in a non-textual format when said determining determines that the least one multimedia attachment in a non-textual format has been selected to be previewed, said appropriate multimedia player suitable for providing a preview of the least one multimedia attachment in a non-textual format.

4. A method as recited in claim 3, wherein the multimedia attachment in a non-textual format can be in a voice, graphics, video or facsimile format.

5. A method as recited in claim 1, wherein the multimedia attachment in a non-textual format can be in a voice, graphics, video, or facsimile format.

6. A method as recited in claim 1, wherein a graphical user interface is provided to allow a user to preview the electronic messages having multimedia attachments in a non-textual format.

7. A method as recited in claim 6, wherein the user is not required to initiate any additional graphical displays in order to preview the electronic messages having multimedia attachments in a non-textual format.

8. A method as recited in claim 7, wherein said method further comprises:
displaying a graphical representation of the electronic message with the at least one attachment in a non-textual format; and
determining whether the graphical representation of the electronic message has been selected to be previewed.

9. A method as recited in claim 8, wherein a graphical representation of the appropriate multimedia player is provided to allow the user to interact with the appropriate multimedia player by using the graphical user interface.

10. A method as recited in claim 8, wherein said displaying of the graphical representation of the electronic message operates to display the graphical representation of the electronic message in a portion of a display window of said graphical user interface as a message identifier in a list of message identifiers representing electronic messages that are available for preview.

11. A method as recited in claim 8, wherein the preview of the least one multimedia attachment is provided without requiring the user to open any additional windows in order to preview the least one multimedia attachment.

12. In an electronic messaging system, an electronic message previewing system suitable for previewing multimedia attachments of electronic messages exchanged within said electronic messaging system, said electronic message previewing system comprising:
a multimedia message attachment detector operating to detect the presence of non-textual multimedia attachments to electronic messages exchanged within said electronic messaging system; and
a multimedia player operating to play at least one portion of the non-textual multimedia attachment when the multimedia message attachment detector detects the presence of a multimedia attachment in a non-textual format.

13. An electronic message previewing system as recited in claim 12, wherein said electronic message previewing system further comprises:
a multimedia player selector operating to select an appropriate multimedia player to play the at least one portion of the non-textual multimedia attachment.

14. An electronic message previewing system as recited in claim 12, wherein the non-textual multimedia attachment can be in a voice, graphics, video, or facsimile format.

15. An electronic message previewing system as recited in claim 12,
wherein said electronic messaging system can be accessed by a user through a graphical user interface to allow a user to preview non-textual multimedia attachment by interacting with the graphical user interface, and
wherein the multimedia player operates to play at least one portion of a non-textual multimedia attachment without requiring the user to initiate any additional graphical displays.

16. A method of providing users of an electronic messaging system with preview of non-textual attachments to electronic messages, said users accessing said electronic messaging system through a graphical user interface to exchange electronic messages with non-textual attachments, said method comprising:
displaying a graphical representation of an electronic message with a non-textual attachment in a list of messages, said list of messages representing messages available for preview by the user and being displayed in a portion of a window of said graphical user interface to be viewed by the user;
determining whether the user has selected the graphical representation of the electronic message with a non-textual attachment in the list of messages; and
displaying a graphical representation of an appropriate multimedia preview enabler when said determining determines that the user has selected the graphical representation of the electronic message with a non-textual attachment in the list of messages.

17. A method as recited in claim 16, wherein said method further comprises:
displaying a graphical representation of an appropriate multimedia player; and
playing at least one portion of the non-textual attachment of the electronic message for the user.

18. A method as recited in claim 17, wherein said displaying of the appropriate multimedia preview enabler operates to display the appropriate multimedia preview enabler without requiring the user to open an additional window.

19. A method as recited in claim 17, wherein said playing of said at least one portion of the non-textual attachment of the electronic message for the user operates to play said at least one portion of the non-textual attachment of the electronic message for the user without requiring the user to open an additional window.

20. A method as recited in claim 16, wherein the non-textual multimedia attachment can be in a voice, graphics, video, or facsimile format.

21. A computer readable media including computer program code for previewing electronic messages having multimedia attachments in a non-textual format, said computer readable media comprising:
computer program code for determining whether an electronic message has at least one multimedia attachment in a non-textual format; and
computer program code for providing a preview of the at least one multimedia attachment in a non-textual format when said computer program code for determining determines that the electronic message has at least one multimedia attachment in a non-textual format.

22. A computer readable media as recited in claim 21, wherein said computer readable media further comprises:
computer program code for determining whether the least one multimedia attachment in a non-textual format has been selected to be previewed.

23. A computer readable media as recited in claim 21, wherein said computer readable media further comprises:
computer program code for determining an appropriate multimedia player for the at least one multimedia attachment in a non-textual format when said computer program code for determining determines that the least one multimedia attachment in a non-textual format has been selected to be previewed, said appropriate multimedia player suitable for providing a preview of the least one multimedia attachment in a non-textual format.

24. A computer readable media as recited in claim 21, wherein the multimedia attachment in a non-textual format can be in a voice, graphics, video, or facsimile format.
